(19) Europäisches Patentamt
European Patent Office
Office européen des brevets

(11) **EP 4 447 398 A1**

(12) **EUROPEAN PATENT APPLICATION**

(43) Date of publication:
**16.10.2024 Bulletin 2024/42**

(21) Application number: **24167088.4**

(22) Date of filing: **27.03.2024**

(51) International Patent Classification (IPC):
***H04L 43/0852*** (2022.01)  ***H04W 24/00*** (2009.01)

(52) Cooperative Patent Classification (CPC):
**H04L 43/0852; H04W 24/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.04.2023  FI 20235410**

(71) Applicant: **Nokia Technologies Oy**
**02610 Espoo (FI)**

(72) Inventor: **KOLLÁR, Martin**
**04018 Kosice (SK)**

(74) Representative: **Bryers Intellectual Property Ltd**
**Bristol & Bath Science Park**
**Dirac Crescent, Emerson's Green**
**Bristol, BS16 7FR (GB)**

(54) **DATA UNIT DELAY MEASUREMENT**

(57)    There are provided measures for data unit delay measurement. Such measures exemplarily comprise, at a controlling component of a network assembly providing wireless communication access to a network, the controlling component controlling a plurality of controlled components of said network assembly and being connected to at least a first controlled component of said plurality of controlled components: monitoring, in a measurement period, arrival of downlink transmission data units at said network assembly, registering, based on said monitoring, times of arrival of said downlink transmission data units at said network assembly within said measurement period, generating information indicative of said times of arrival of delivery confirmed downlink transmission data units out of said downlink transmission data units, and transmitting said information indicative of said times of arrival to a network analysis entity.

Fig. 7

monitoring, in a measurement period, arrival of downlink transmission data units at a network assembly — S71

registering, based on said monitoring, times of arrival of said downlink transmission data units at said network assembly within said measurement period — S72

generating information indicative of said times of arrival of delivery confirmed downlink transmission data units out of said downlink transmission data units — S73

transmitting said information indicative of said times of arrival to a network analysis entity — S74

EP 4 447 398 A1

**Description**

<u>Field</u>

Various example embodiments relate to data unit delay measurement. More specifically, various example embodiments exemplarily relate to measures (including methods, apparatuses and computer program products) for realizing data unit delay measurement.

<u>Background</u>

The present specification generally relates to quality of services monitoring in mobile communications networks.

An average packet delay is one of the most important key performance indicators (KPI) used to monitor quality of services perceived by an end user.

Services provided by 3rd Generation Partnership Project (3GPP) 5th Generation (5G) New Radio (NR) are based on internet protocol (IP) packets received from the 5G core network (CN) which are mapped into downlink (DL) packet data configuration protocol (PDCP) service data unit (SDU) packets in 5G NR.

In order to evaluate an impact of 5G NR on end user performance, monitoring an average of DL PDCP SDU delay samples is needed, where each sample related to the DL PDCP SDU shall be representative of delay at a gNB. Preferably, such measurement shall be representative for the entire traffic (e.g. in a considered period). In addition, such measurement shall preferably not load terminals or the mobile connection of terminals.

Hence, the problem arises that approaches for measuring representative packet delays with no or minimal impact to terminals and their mobile connections are required.

Hence, there is a need to provide for data unit delay measurement.

<u>Summary</u>

Various example embodiments aim at addressing at least part of the above issues and/or problems and drawbacks.

Various aspects of example embodiments are set out in the appended claims.

According to an exemplary aspect, there is provided a method of a controlling component of a network assembly providing wireless communication access to a network, the controlling component controlling a plurality of controlled components of said network assembly and being connected to at least a first controlled component of said plurality of controlled components, the method comprising monitoring, in a measurement period, arrival of downlink transmission data units at said network assembly, registering, based on said monitoring, times of arrival of said downlink transmission data units at said network assembly within said measurement period, generating information indicative of said times of arrival of delivery confirmed downlink transmission data units out of said downlink transmission data units, and transmitting said information indicative of said times of arrival to a network analysis entity.

According to an exemplary aspect, there is provided a method of a first controlled component of a network assembly providing wireless communication access to a network, the first controlled component being controlled by a controlling component of said network assembly controlling a plurality of controlled components of said network assembly including said first controlled component, and the first controlled component being connected to said controlling component, the method comprising monitoring, in a measurement period, departure of downlink transmission data units from said network assembly, registering, based on said monitoring, times of departure of said downlink transmission data units from said network assembly within said measurement period, generating information indicative of said times of departure of delivery confirmed downlink transmission data units out of said downlink transmission data units, and transmitting said information indicative of said times of departure to a network analysis entity.

According to an exemplary aspect, there is provided a method of a network analysis entity, the method comprising receiving, from a controlling component of a network assembly providing wireless communication access to a network, the controlling component controlling a plurality of controlled components of said network assembly and being connected to at least a first controlled component of said plurality of controlled components, information indicative of times of arrival of delivery confirmed downlink transmission data units arriving at said network assembly within a measurement period, receiving, from said first controlled component, information indicative of times of departure of said delivery confirmed downlink transmission data units departing from said network assembly within said measurement period, and determining an average downlink transmission data unit delay based on said information indicative of said times of arrival and said information indicative of said times of departure.

According to an exemplary aspect, there is provided an apparatus of a controlling component of a network assembly providing wireless communication access to a network, the controlling component controlling a plurality of controlled components of said network assembly and being connected to at least a first controlled component of said plurality of controlled components, the apparatus comprising monitoring circuitry configured to monitor, in a measurement period, arrival of downlink transmission data units at said network assembly, registering circuitry configured to register, based on said monitoring, times of arrival of said downlink transmission data units at said network assembly within said measurement period, generating circuitry configured to generate information indicative of said times of arrival of delivery confirmed downlink transmission data units out of said downlink transmission data units, and transmitting circuitry configured to transmit said information indicative of said times of arrival to a network analysis entity.

According to an exemplary aspect, there is provided an apparatus of a first controlled component of a network assembly providing wireless communication access to a network, the first controlled component being controlled by a controlling component of said network assembly controlling a plurality of controlled components of said network assembly including said first controlled component, and the first controlled component being connected to said controlling component, the apparatus comprising monitoring circuitry configured to monitor, in a measurement period, departure of downlink transmission data units from said network assembly, registering circuitry configured to register, based on said monitoring, times of departure of said downlink transmission data units from said network assembly within said measurement period, generating circuitry configured to generate information indicative of said times of departure of delivery confirmed downlink transmission data units out of said downlink transmission data units, and transmitting circuitry configured to transmit said information indicative of said times of departure to a network analysis entity.

According to an exemplary aspect, there is provided an apparatus of a network analysis entity, the apparatus comprising receiving circuitry configured to receive, from a controlling component of a network assembly providing wireless communication access to a network, the controlling component controlling a plurality of controlled components of said network assembly and being connected to at least a first controlled component of said plurality of controlled components, information indicative of times of arrival of delivery confirmed downlink transmission data units arriving at said network assembly within a measurement period, and to receive, from said first controlled component, information indicative of times of departure of said delivery confirmed downlink transmission data units departing from said network assembly within said measurement period, and determining circuitry configured to determine an average downlink transmission data unit delay based on said information indicative of said times of arrival and said information indicative of said times of departure.

According to an exemplary aspect, there is provided an apparatus of a controlling component of a network assembly providing wireless communication access to a network, the controlling component controlling a plurality of controlled components of said network assembly and being connected to at least a first controlled component of said plurality of controlled components, the apparatus comprising at least one processor, at least one memory including computer program code, and at least one interface configured for communication with at least another apparatus, the at least one processor, with the at least one memory and the computer program code, being configured to cause the apparatus to perform monitoring, in a measurement period, arrival of downlink transmission data units at said network assembly, registering, based on said monitoring, times of arrival of said downlink transmission data units at said network assembly within said measurement period, generating information indicative of said times of arrival of delivery confirmed downlink transmission data units out of said downlink transmission data units, and transmitting said information indicative of said times of arrival to a network analysis entity.

According to an exemplary aspect, there is provided an apparatus of a first controlled component of a network assembly providing wireless communication access to a network, the first controlled component being controlled by a controlling component of said network assembly controlling a plurality of controlled components of said network assembly including said first controlled component, and the first controlled component being connected to said controlling component, the apparatus comprising at least one processor, at least one memory including computer program code, and at least one interface configured for communication with at least another apparatus, the at least one processor, with the at least one memory and the computer program code, being configured to cause the apparatus to perform monitoring, in a measurement period, departure of downlink transmission data units from said network assembly, registering, based on said monitoring, times of departure of said downlink transmission data units from said network assembly within said measurement period, generating information indicative of said times of departure of delivery confirmed downlink transmission data units out of said downlink transmission data units, and transmitting said information indicative of said times of departure to a network analysis entity.

According to an exemplary aspect, there is provided an apparatus of a network analysis entity, the apparatus comprising at least one processor, at least one memory including computer program code, and at least one interface configured for communication with at least another apparatus, the at least one processor, with the at least one memory and the computer program code, being configured to cause the apparatus to perform receiving, from a controlling component of a network assembly providing wireless communication access to a network, the controlling component controlling a plurality of controlled components of said network assembly and being connected to at least a first controlled component of said plurality of controlled components, information indicative of times of arrival of delivery confirmed downlink transmission data units arriving at said network assembly within a measurement period, receiving, from said first controlled component, information indicative of times of departure of said delivery confirmed downlink transmission data units departing from said network assembly within said measurement period, and determining an average downlink transmission data unit delay based on said information indicative of said times of arrival and said information indicative of said times of departure.

According to an exemplary aspect, there is provided a computer program product comprising computer-executable computer program code which, when the program is run on a computer (e.g. a computer of an apparatus according to any one of the aforementioned apparatus-related exemplary aspects of the present disclosure), is configured to cause the computer to carry out the method according to any one of the aforementioned method-related exemplary aspects of the present disclosure.

Such computer program product may comprise (or be embodied) a (tangible) computer-readable (storage) medium or the like on which the computer-executable computer program code is stored, and/or the program may be directly loadable into an internal memory of the computer or a processor thereof.

Any one of the above aspects enables an efficient determination of representative packet delays for monitoring quality of services perceived by end users to thereby solve at least part of the problems and drawbacks identified in relation to the prior art.

By way of example embodiments, there is provided data unit delay measurement. More specifically, by way of example embodiments, there are provided measures and mechanisms for realizing data unit delay measurement.

Thus, improvement is achieved by methods, apparatuses and computer program products enabling/realizing data unit delay measurement.

Brief description of the drawings

In the following, the present disclosure will be described in greater detail by way of non-limiting examples with reference to the accompanying drawings, in which

Figure 1 is a block diagram illustrating an apparatus according to example embodiments,

Figure 2 is a block diagram illustrating an apparatus according to example embodiments,

Figure 3 is a block diagram illustrating an apparatus according to example embodiments,

Figure 4 is a block diagram illustrating an apparatus according to example embodiments,

Figure 5 is a block diagram illustrating an apparatus according to example embodiments,

Figure 6 is a block diagram illustrating an apparatus according to example embodiments,

Figure 7 is a schematic diagram of a procedure according to example embodiments,

Figure 8 is a schematic diagram of a procedure according to example embodiments,

Figure 9 is a schematic diagram of a procedure according to example embodiments,

Figure 10 is a schematic diagram of a procedure according to example embodiments,

Figure 11 is a schematic diagram of a procedure according to example embodiments,

Figure 12 is a schematic diagram of a procedure according to example embodiments, and

Figure 13 is a block diagram alternatively illustrating apparatuses according to example embodiments.

Detailed description

The present disclosure is described herein with reference to particular non-limiting examples and to what are presently considered to be conceivable embodiments. A person skilled in the art will appreciate that the disclosure is by no means limited to these examples, and may be more broadly applied.

It is to be noted that the following description of the present disclosure and its embodiments mainly refers to specifications being used as non-limiting examples for certain exemplary network configurations and deployments. Namely, the present disclosure and its embodiments are mainly described in relation to 3GPP specifications being used as non-limiting examples for certain exemplary network configurations and deployments. As such, the description of example embodiments given herein specifically refers to terminology which is directly related thereto. Such terminology is only used in the context of the presented non-limiting examples, and does naturally not limit the disclosure in any way. Rather, any other communication or communication related system deployment, etc. may also be utilized as long as compliant with the features described herein.

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

As used herein, "at least one of the following:" and "at least one of" and similar wording, where the list of two or more elements are joined by "and" or "or", mean at least any one of the elements, or at least any two or more of the elements, or at least all the elements.

According to example embodiments, in general terms, there are provided measures and mechanisms for (enabling/realizing) data unit delay measurement.

For (an average of) DL PDCP SDU delay samples to be representative of delay at a gNB, these may be measured from the point in time the first part of a respective packet is received in the gNB until the last part of the packet successfully is delivered (from the gNB) to a user equipment (UE).

In some approaches for determining a distribution of DL delay between NG-RAN and UE, the measurement is based on General Packet Radio System (GPRS) tunneling protocol (GTP) protocol data unit (PDU) monitoring packets generated in a user plane function (UPF). According to such approaches, not each one IP packet is transformed into a GTP PDU packet. The selection of the packet is done randomly. Accordingly, the measured delay may not reflect the reality due to such limitation. This impacts the precision of the obtained delay. In addition, involvement of GTP PDU monitoring introduces an additional volume to be transmitted over interfaces to the UE and thus contributes to their overloading. Therefore, the precision of the delay measurement according to such approaches is a tradeoff between percentage of GTP PDU monitoring packets from the IP packets and amount of traffic to be transmitted over the interfaces to UE.

In some other approaches for determining a DL delay in NG-RAN for a subnetwork or a corresponding KPI, the delay tends to provide an averaged NG RAN delay, and the averaged NG RAN delay is obtained as a sum of averaged delay values related to centralized unit (CU) user plane (UP), F1 interface, distributed unit (DU) retention delay and hybrid automatic repeat reQuest (HARQ) loop delay. However, it is not that each sample related to the DL PDCP SDU is measured from the point in time the first part of the packet is received in a gNB until the last part of the packet is successfully delivered to UE. As within the average delay, parts related to given components of the gNB contain all packets (i.e. also the ones that are discarded in CU UP, discarded in DU, retransmitted packets between gNB components), the calculated delay is considered as a weighted delay. Further, the portion of delay related to the given gNB component is followed with an uncertainty which may contribute to total uncertainty when summing up delays from all the gNB components (with a corresponding not sufficient precision) that may be unacceptable for ultra-reliable low latency communication (URLLC) services.

In view thereof, according to example embodiments, means/method for average DL PDCP SDU delay measurement for delay sensitive services with radio link control (RLC) acknowledge mode (AM) enabled without any additional information to be transmitted over interfaces to UEs are provided.

In relation to URLLC services, real gaming and interactive services can be seen as typical examples of delay sensitive services with RLC AM enabled.

Hence, in brief, according to example embodiments, means/method are provided for average DL PDCP SDU delay measurement without any additional information to be transmitted on interfaces to UE for delay sensitive services with RLC AM enabled.

According to example embodiments, an averaged delay per DL PDCP SDU in 5G NR side is measured in that

- a (first) sum of point in time samples is established (e.g. calculated), wherein each sample is related to a point in time the first part of a respective DL PDCP SDU has been received in CU UP of a gNB which is consequently confirmed as successfully delivered to a UE in a downlink data delivery status (DDDS) report sent from DU to CU UP,
- a (second) sum of point in time samples is established (e.g. calculated), wherein each sample is related to a point in time the last part of the respective DL PDCP SDU has been sent to the UE and consequently confirmed as successfully delivered to the UE in the DDDS report sent from DU to CU UP,
- the (first) sum value is subtracted from the (second) sum value, and
- the subtraction result is divided by the number of DL PDCP SDU packets which were reported as successfully received to UE in the DDDS reports from DU to CU UP.

It is noted that an DL PDCP SDU may be reported in the DDDS report sent from DU to CU UP as successfully delivered to a UE only in case of RLC AM.

Example embodiments are specified below in more detail.

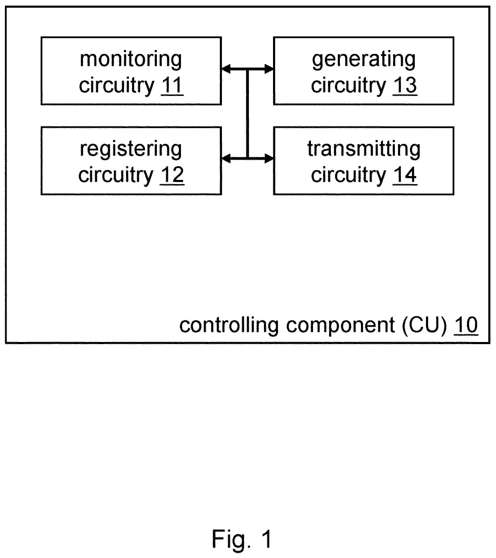

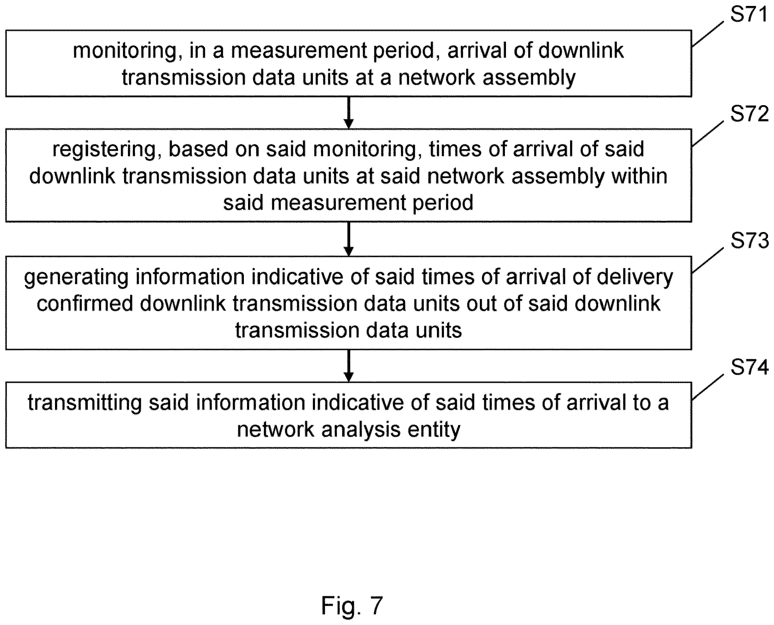

Figure 1 is a block diagram illustrating an apparatus according to example embodiments. The apparatus may be a network node or entity 10 such as a controlling component (e.g. centralized unit) of a network assembly (e.g. a gNB) or network node or entity providing such functionality, the network assembly providing wireless communication access (e.g. for a terminal) to a network, the controlling component controlling a plurality of controlled components (e.g. distributed units) of said network assembly and being connected to at least a first controlled component of said plurality of controlled components. The apparatus comprises a monitoring circuitry 11, a registering circuitry 12, a generating circuitry 13, and a transmitting circuitry 14. The monitoring circuitry 11 monitors, in a measurement period, arrival of downlink transmission data units at said network assembly. The registering circuitry 12 registers, based on said monitoring (of the monitoring circuitry 11), times of arrival of said downlink transmission data units at said network assembly within said measurement period. The generating circuitry 13 generates information indicative of said times of arrival of delivery confirmed downlink transmission data units out of said downlink transmission data units. The transmitting circuitry 14 transmits said information indicative of said times of arrival to a network analysis entity. Figure 7 is a schematic diagram of a procedure according to example embodiments. The apparatus according to Figure 1 may perform the method of Figure 7 but is not limited to this method. The method of Figure 7 may be performed by the apparatus of Figure 1 but is not limited to being performed by this apparatus.

As shown in Figure 7, a procedure according to example embodiments comprises an operation of monitoring (S71), in a measurement period, arrival of downlink transmission data units at said network assembly, an operation of registering (S72), based on said monitoring, times of arrival of said downlink transmission data units at said network assembly within said measurement period, an operation of generating (S73) information indicative of said times of arrival of delivery confirmed downlink transmission data units out of said downlink transmission data units, and an operation of transmitting (S74) said information indicative of said times of arrival to a network analysis entity.

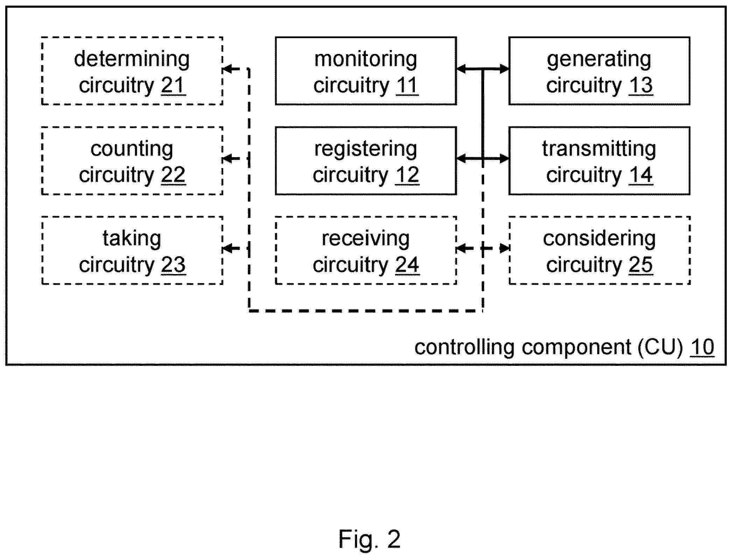

Figure 2 is a block diagram illustrating an apparatus according to example embodiments. In particular, Figure 2 illustrates a variation of the apparatus shown in Figure 1. The apparatus according to Figure 2 may thus further comprise a determining circuitry 21, a counting circuitry 22, a taking circuitry 23, a receiving circuitry 24, and/or a considering circuitry 25.

In an embodiment at least some of the functionalities of the apparatus shown in Figure 1 (or 2) may be shared between two physically separate devices forming one operational entity. Therefore, the apparatus may be seen to depict the operational entity comprising one or more physically separate devices for executing at least some of the described processes.

According to a variation of the procedure shown in Figure 7, exemplary details of the generating operation (S73) are given, which are inherently independent from each other as such. Such exemplary generating operation (S73) according to example embodiments may comprise an operation of determining a sum of said times of arrival of said delivery confirmed downlink transmission data units. According to such variation, said information indicative of said times of arrival includes said sum.

According to a variation of the procedure shown in Figure 7, exemplary additional operations are given, which are inherently independent from each other as such. According to such variation, an exemplary method according to example embodiments may comprise an operation of counting, based on said monitoring, a number of said delivery confirmed downlink transmission data units, and an operation of transmitting information indicative of said number to said network analysis entity.

According to a variation of the procedure shown in Figure 7, exemplary details of the registering operation (S72) are given, which are inherently independent from each other as such. Such exemplary registering operation (S72) according to example embodiments may comprise an operation of taking, as said time of arrival of a respective downlink transmission data unit, an arrival time of a leading portion of said respective downlink transmission data unit at said network assembly.

According to further example embodiments, said information indicative of said times of arrival is on a per quality-of-service level basis.

According to further example embodiments, said information indicative of said number is on a per quality-of-service level basis.

According to a variation of the procedure shown in Figure 7, exemplary additional operations are given, which are inherently independent from each other as such. According to such variation, an exemplary method according to example embodiments may comprise an operation of receiving information indicative of successfully received downlink transmission data units of said downlink transmission data units, said successfully received downlink transmission data units being successfully received at a respective destination terminal, and an operation of considering said successfully received downlink transmission data units as said delivery confirmed downlink transmission data units.

According to further example embodiments, said information indicative of said successfully received downlink transmission data units is included in a downlink data delivery status report.

According to further example embodiments, each of said downlink transmission data units is a downlink packet data convergence protocol service data unit.

According to further example embodiments, said controlling component of said network assembly is a centralized unit.

According to further example embodiments, each of said plurality of controlled components of said network assembly is a distributed unit.

According to further example embodiments, said network assembly is a gNB.

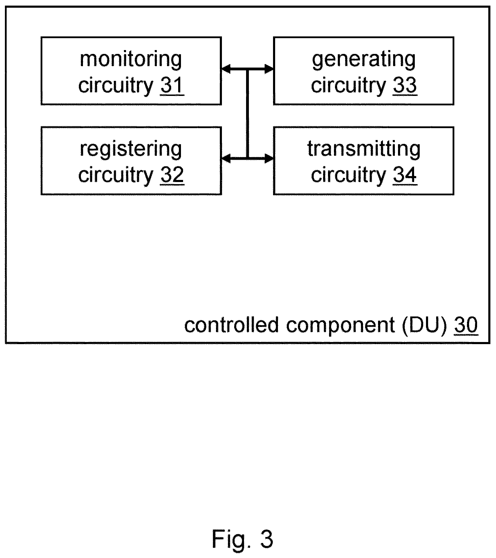

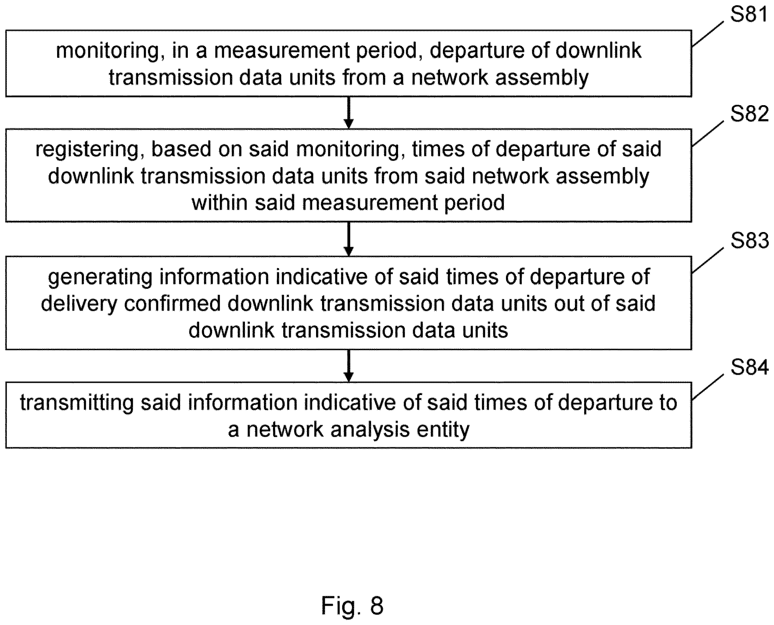

Figure 3 is a block diagram illustrating an apparatus according to example embodiments. The apparatus may be a network node or entity 30 such as a controlled component (e.g. distributed unit) of a network assembly (e.g. a gNB) or network node or entity providing such functionality, the network assembly providing wireless communication access to a network, the first controlled component being controlled by a controlling component (e.g. a centralized unit) of said network assembly controlling a plurality of controlled components of said network assembly including said first controlled component, and the first controlled component being connected to said controlling component. The apparatus comprises a monitoring circuitry 31, a registering circuitry 32, a generating circuitry 33, and a transmitting circuitry 34. The monitoring circuitry 31 monitors, in a measurement period, departure of downlink transmission data units from said network assembly. The registering circuitry 32 registers, based on said monitoring (of said monitoring circuitry 31), times of departure of said downlink transmission data units from said network assembly within said measurement period. The generating circuitry 33 generates information indicative of said times of departure of delivery confirmed downlink transmission data units out of said downlink transmission data units. The transmitting circuitry 34 transmits said information indicative of said times of departure to a network analysis entity. Figure 8 is a schematic diagram of a procedure according to example embodiments. The apparatus according to Figure 3 may perform the method of Figure 8 but is not limited to this method. The method of Figure 8 may be performed by the apparatus of Figure 3 but is not limited to being performed by this apparatus.

As shown in Figure 8, a procedure according to example embodiments comprises an operation of monitoring (S81), in a measurement period, departure of downlink transmission data units from said network assembly, an operation of registering (S82), based on said monitoring, times of departure of said downlink transmission data units from said network assembly within said measurement period, an operation of generating (S83) information indicative of said times of departure of delivery confirmed downlink transmission data units out of said downlink transmission data units, and an operation of transmitting (S84) said information indicative of said times of departure to a network analysis entity.

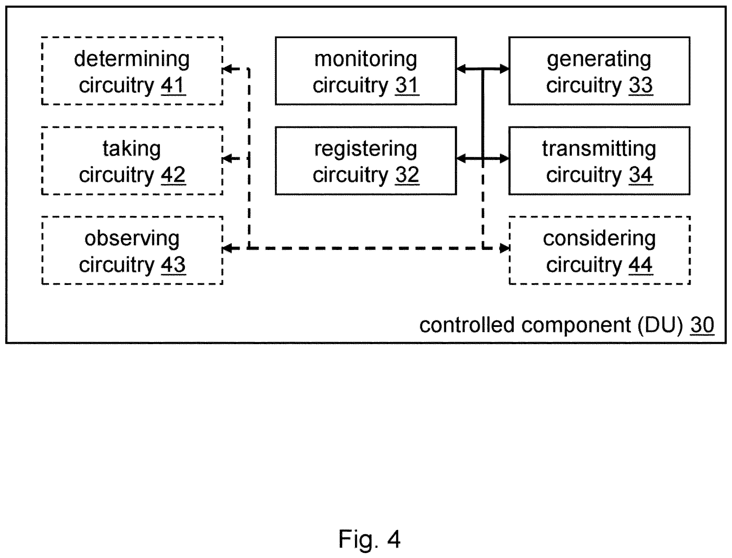

Figure 4 is a block diagram illustrating an apparatus according to example embodiments. In particular, Figure 4 illustrates a variation of the apparatus shown in Figure 3. The apparatus according to Figure 4 may thus further comprise a determining circuitry 41, a taking circuitry 42, an observing circuitry 43, and/or a considering circuitry 44.

In an embodiment at least some of the functionalities of the apparatus shown in Figure 3 (or 4) may be shared between two physically separate devices forming one operational entity. Therefore, the apparatus may be seen to depict the operational entity comprising one or more physically separate devices for executing at least some of the described processes.

According to a variation of the procedure shown in Figure 8, exemplary details of the generating operation (S83) are given, which are inherently independent from each other as such. Such exemplary generating operation (S83) according to example embodiments may comprise an operation of determining a sum of said times of departure of said delivery confirmed downlink transmission data units. According to such variation, said information indicative of said times of departure includes said sum.

According to a variation of the procedure shown in Figure 8, exemplary details of the registering operation (S82) are given, which are inherently independent from each other as such. Such exemplary registering operation (S82) according to example embodiments may comprise an operation of taking, as said time of departure of a respective downlink transmission data unit, a departure time of a trailing portion of said respective downlink transmission data unit from said network assembly.

According to further example embodiments, said information indicative of said times of departure is on a per quality-of-service level basis.

According to a variation of the procedure shown in Figure 8, exemplary additional operations are given, which are inherently independent from each other as such. According to such variation, an exemplary method according to example embodiments may comprise an operation of observing success of reception for each of said downlink transmission data units at a respective destination terminal, and an operation of considering successfully received downlink transmission data units of said downlink transmission data units as said delivery confirmed downlink transmission data units, said successfully received downlink transmission data units being successfully received at said respective destination terminal.

According to a variation of the procedure shown in Figure 8, exemplary additional operations are given, which are inherently independent from each other as such. According to such variation, an exemplary method according to example embodiments may comprise an operation of generating information indicative of said successfully received downlink transmission data units, and an operation of transmitting said information indicative of said successfully received downlink transmission data units to said controlling component.

According to further example embodiments, said information indicative of said successfully received downlink transmission data units is included in a downlink data delivery status report.

According to further example embodiments, each of said downlink transmission data units is a downlink packet data convergence protocol service data unit.

According to further example embodiments, said controlling component of said network assembly is a centralized unit.

According to further example embodiments, each of said plurality of controlled components of said network assembly is a distributed unit.

According to further example embodiments, said network assembly is a gNB.

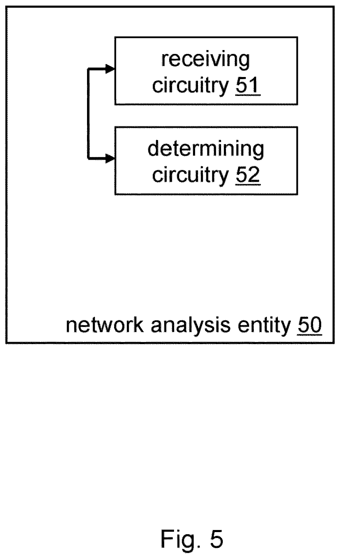

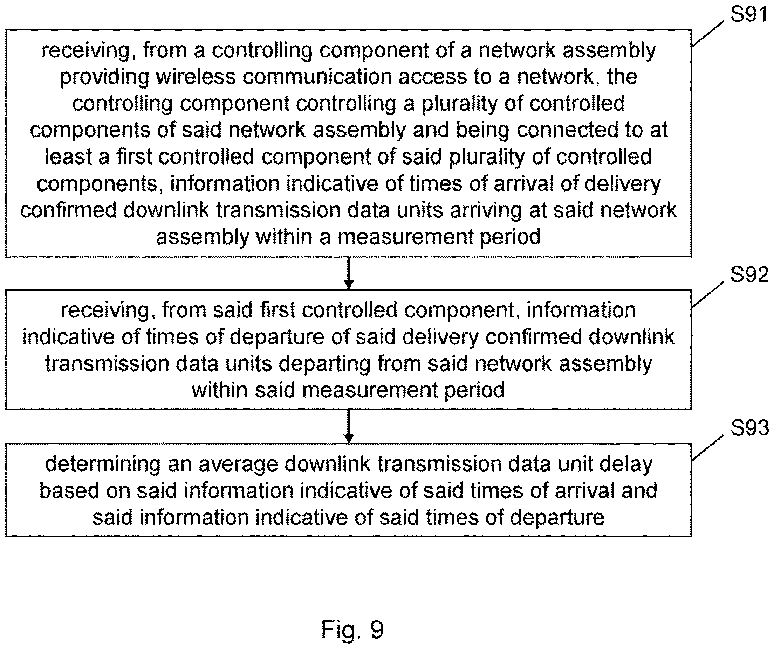

Figure 5 is a block diagram illustrating an apparatus according to example embodiments. The apparatus may be a network node or entity 50 such as a network analysis entity or network node or entity providing such functionality, comprising a receiving circuitry 51 and a determining circuitry 52. The receiving circuitry 51 receives, from a controlling component (e.g. a centralized unit) of a network assembly (e.g. a gNB) providing wireless communication access to a network, the controlling component controlling a plurality of controlled components (e.g. distributed units) of said network assembly and being connected to at least a first controlled component of said plurality of controlled components, information indicative of times of arrival of delivery confirmed downlink transmission data units arriving at said network assembly within a measurement period. The receiving circuitry 51 (or an additional receiving circuitry) receives, from said first controlled component, information indicative of times of departure of said delivery confirmed downlink transmission data units departing from said network assembly within said measurement period. The determining circuitry 52 determines an average downlink transmission data unit delay based on said information indicative of said times of arrival and said information indicative of said times of departure. Figure 9 is a schematic diagram of a procedure according to example embodiments. The apparatus according to Figure 5 may perform the method of Figure 9 but is not limited to this method. The method of Figure 9 may be performed by the apparatus of Figure 5 but is not limited to being performed by this apparatus.

As shown in Figure 9, a procedure according to example embodiments comprises an operation of receiving (S91), from a controlling component of a network assembly providing wireless communication access to a network, the controlling component controlling a plurality of controlled components of said network assembly and being connected to at least a first controlled component of said plurality of controlled components, information indicative of times of arrival of delivery confirmed downlink transmission data units arriving at said network assembly within a measurement period, an operation of receiving (S92), from said first controlled component, information indicative of times of departure of said delivery confirmed downlink transmission data units departing from said network assembly within said measurement period, and an operation of determining (S93) an average downlink transmission data unit delay based on said information indicative of said times of arrival and said information indicative of said times of departure.

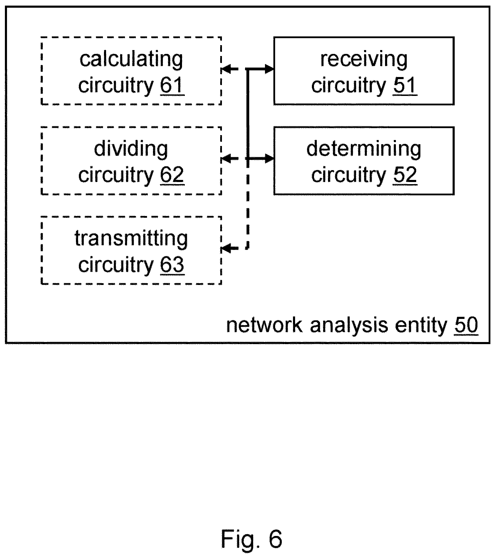

Figure 6 is a block diagram illustrating an apparatus according to example embodiments. In particular, Figure 6 illustrates a variation of the apparatus shown in Figure 5. The apparatus according to Figure 6 may thus further comprise a calculating circuitry 61, a dividing circuitry 62, and/or a transmitting circuitry 63.

In an embodiment at least some of the functionalities of the apparatus shown in Figure 5 (or 6) may be shared between two physically separate devices forming one operational entity. Therefore, the apparatus may be seen to depict the operational entity comprising one or more physically separate devices for executing at least some of the described processes.

According to further example embodiments, said information indicative of said times of arrival includes a sum of said times of arrival, and said information indicative of said times of departure includes a sum of said times of departure.

According to a variation of the procedure shown in Figure 9, exemplary additional operations are given, which are inherently independent from each other as such. According to such variation, an exemplary method according to example embodiments may comprise an operation of receiving, from said controlling component, information indicative of a number of said delivery confirmed downlink transmission data units arriving at said network assembly within said measurement period. According to such variation, said determining is further based on said information indicative of said number.

According to a variation of the procedure shown in Figure 9, exemplary details of the determining operation (S93) are given, which are inherently independent from each other as such. Such exemplary determining operation (S93) according to example embodiments may comprise an operation of calculating a difference between said sum of said times of departure and said sum of said times of arrival, and an operation of dividing said difference by said number.

According to a variation of the procedure shown in Figure 9, exemplary additional operations are given, which are inherently independent from each other as such. According to such variation, an exemplary method according to example embodiments may comprise an operation of transmitting said average downlink transmission data unit delay.

According to further example embodiments, said average downlink transmission data unit delay is on a per quality-of-service level basis.

According to further example embodiments, each of said downlink transmission data units is a downlink packet data convergence protocol service data unit.

According to further example embodiments, said controlling component of said network assembly is a centralized unit.

According to further example embodiments, each of said plurality of controlled components of said network assembly is a distributed unit.

According to further example embodiments, said network assembly is a gNB.

Example embodiments outlined and specified above are explained below in more specific terms.

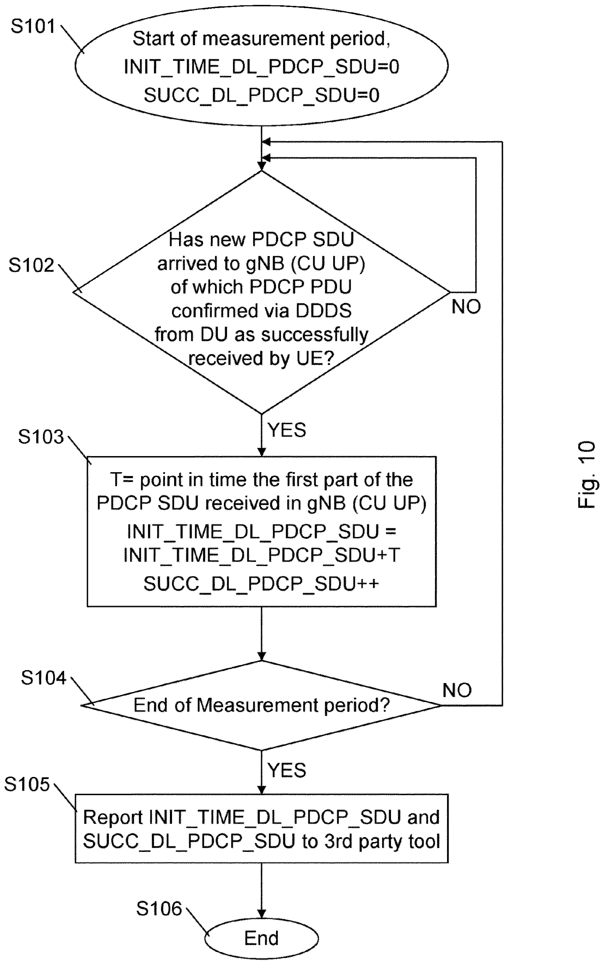

Figure 10 is a schematic diagram of a procedure according to example embodiments, and in particular illustrates a procedure exemplarily run in a centralized unit in the user plane (CU-UP) of a gNB.

In brief, according to example embodiments, at the end of a measurement period, the measurement INIT_TIME_DL_PDCP_SDU is reported, which comprises a sum of point in time samples, wherein each sample is related to the point in time the first part of a respective DL PDCP SDU has been received in CU UP of gNB which is consequently confirmed as successfully delivered to UE in the DDDS report sent from DU to CU UP. Further, according to example embodiments, at the end of the measurement period, the measurement SUCC_DL_PDCP_SDU is reported, which comprises the number of DL PDCP SDU packets which were reported as successfully delivered to UE in the DDDS report from DU to CU UP.

In more detail, in a step S101 of Figure 10, according to example embodiments, a measurement period is started, and the values of

- the sum of points in time of receipt of respective first parts of respective (successful/confirmed) DL PDCP SDUs at a gNB (i.e., the CU thereof), and of
- the number of (successful/confirmed) DL PDCP SDU packets are initialized e.g. as "0".

Further, in a step S102 of Figure 10, according to example embodiments, it is checked whether a new DL PDCP SDU has arrived at the gNB (i.e., the CU thereof), and if so, it is proceeded further to step S103. Here, it is noted that only successful/confirmed DL PDCP SDUs are considered, i.e., those subsequently reported as being successfully delivered to UE in the DDDS report from DU to CU UP.

Further, in a step S103 of Figure 10, according to example embodiments, the sum of points in time of receipt of respective first parts of respective (successful/confirmed) DL PDCP SDUs at the gNB (i.e., the CU thereof) is correspondingly accumulated, and the number of (successful/confirmed) DL PDCP SDU packets is incremented.

Further, in a step S104 of Figure 10, according to example embodiments, it is checked whether the measurement period has ended. The processing of steps S102 to S104 is repeated until the measurement period has ended. Once the measurement period has ended, it is proceeded further to step S105.

In step S105 of Figure 10, according to example embodiments, the sum of points in time of receipt of respective first parts of respective (successful/confirmed) DL PDCP SDUs at the gNB (i.e., the CU thereof) and the number of (successful/confirmed) DL PDCP SDU packets are reported, and the procedure ends.

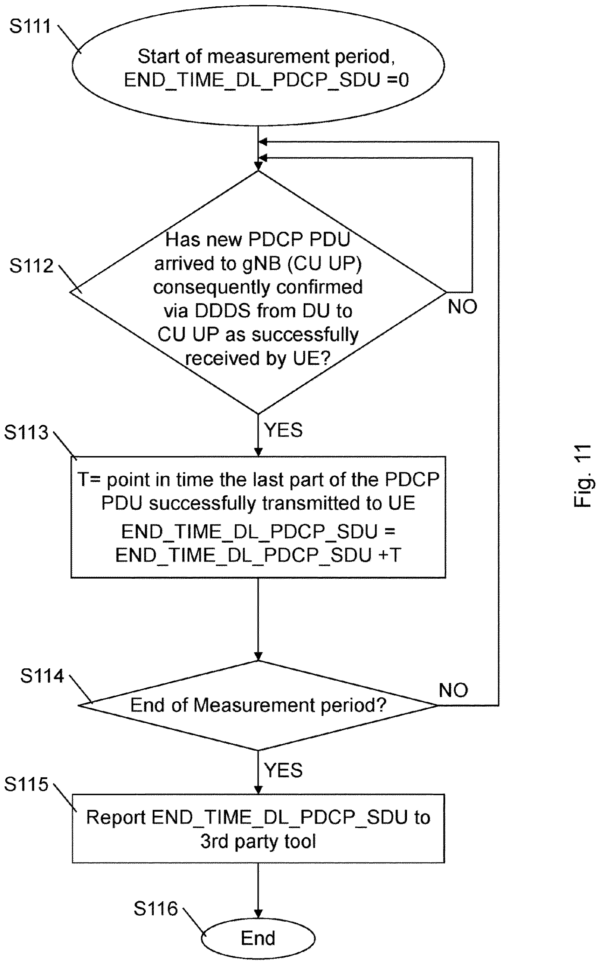

Figure 11 is a schematic diagram of a procedure according to example embodiments, and in particular illustrates a procedure exemplarily run in a distributed unit of a gNB.

In brief, according to example embodiments, at the end of a measurement period, the measurement END_TIME_DL_PDCP_SDU is reported, which comprises a sum of point in time samples, wherein each sample is related to a point in time a last part of the respective DL PDCP SDU has been sent to UE and consequently confirmed as successfully delivered to UE in the DDDS report sent from DU to CU UP.

In more detail, in a step S111 of Figure 11, according to example embodiments, a measurement period is started, and the value of the sum of points in time of transmission of respective last parts of respective (successful/confirmed) DL PDCP SDUs from a gNB (i.e., the DU thereof) is initialized e.g. as "0".

Further, in a step S112 of Figure 11, according to example embodiments, it is checked whether a new DL PDCP SDU has arrived at the gNB (i.e., the CU thereof), and if so, it is proceeded further to step S113. Here, it is noted that only successful/confirmed DL PDCP SDUs are considered, i.e., those subsequently reported as being successfully delivered to UE in the DDDS report from DU to CU UP.

Further, in a step S113 of Figure 11, according to example embodiments, the sum of points in time of transmission of respective last parts of respective (successful/confirmed) DL PDCP SDUs from the gNB (i.e., the DU thereof) is correspondingly accumulated.

Further, in a step S114 of Figure 11, according to example embodiments, it is checked whether the measurement period has ended. The processing of steps S112 to S114 is repeated until the measurement period has ended. Once the measurement period has ended, it is proceeded further to step S115.

In step S115 of Figure 11, according to example embodiments, the sum of points in time of transmission of respective last parts of respective (successful/confirmed) DL PDCP SDUs from the gNB (i.e., the DU thereof) is reported, and the procedure ends.

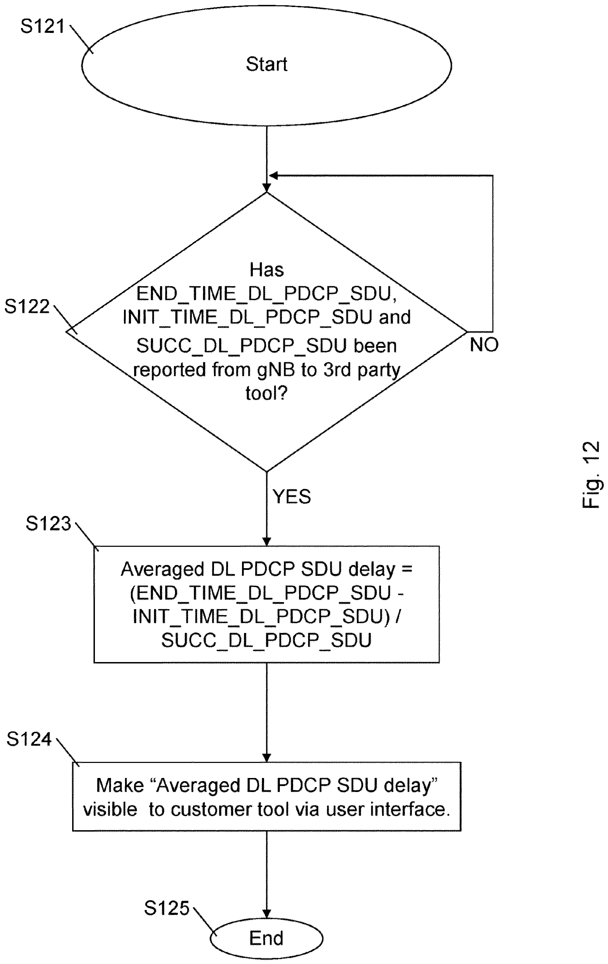

Figure 12 is a schematic diagram of a procedure according to example embodiments, and in particular illustrates a procedure exemplarily run in as a 3rd party tool, or, in general, an entity providing data analysis and/or evaluation functionality.

In brief, according to example embodiments, the averaged DL PDCP SDU delay is obtained as (END_TIME_DL_PDCP_SDU - INIT_TIME_DL_PDCP_SDU) divided by SUCC_DL_PDCP_SDU per the given measurement period, i.e.

$$\frac{END\_TIME\_DL\_PDCP\_SDU - INIT\_TIME\_DL\_PDCP\_SDU}{SUCC\_DL\_PDCP\_SDU} \qquad (1)$$

In more detail, after a start in a step S121 of Figure 12, in a step S122 of Figure 12, according to example embodiments, it is checked whether

- a sum of points in time of receipt of respective first parts of respective (successful/confirmed) DL PDCP SDUs at a gNB (i.e., a CU thereof),
- the number of (successful/confirmed) DL PDCP SDU packets, and
- the sum of points in time of transmission of respective last parts of respective (successful/confirmed) DL PDCP SDUs from the gNB (i.e., a DU thereof)

are reported, and if so, it is proceeded further to step S123.

Further, in a step S123 of Figure 12, according to example embodiments, the averaged DL PDCP SDU delay at the gNB is calculated e.g. based on the above equation (1).

In a step S124 of Figure 12, according to example embodiments, the thus calculated averaged DL PDCP SDU delay is provided to e.g. responsible or authorized entities, and the procedure ends.

Such provision may for example be effected via a user interface to a customer. Such provision may also be effected via a machine interface to any control or management entity.

According to example embodiments

- the measurement INIT_TIME_DL_PDCP_SDU (i.e., sum of points in time of receipt of respective first parts of respective (successful/confirmed) DL PDCP SDUs at a gNB (i.e., a CU thereof)),
- the measurement SUCC_DL_PDCP_SDU (i.e., number of (successful/confirmed) DL PDCP SDU packets), and
- the measurement END_TIME_DL_PDCP_SDU (i.e., sum of points in time of transmission of respective last parts of respective (successful/confirmed) DL PDCP SDUs from the gNB (i.e., a DU thereof))

may be specified as follows:

INIT_TIME_DL_PDCP_SDU (i.e., sum of points in time of receipt of respective first parts of respective (successful/confirmed) DL PDCP SDUs at a gNB (i.e.,
a CU thereof)), in other words, sum of points in time the successful DL PDCP SDUs are received in gNB:

    a) This measurement provides a sum of points in time the DL PDCP SDU received in gNB which was consequently successfully received by UE. The measurement is split into subcounters per quality of service (QoS) level (mapped 5QI or quality of service class identifier (QCI) in NR option 3) with RLC AM enabled.
    b) Cumulative counter (CC).
    c) This measurement is obtained by summing up the point in time samples, each sample is related to point in time the first part of DL PDCP SDU received in gNB which was consequently successfully received by UE in RLC AM and communicated as DL PDCP PDU (the PDCP SDU is mapped to) successfully delivered to UE within the DDDS message (e.g. 3GPP TS 38.425) sent from DU to CU UP. The measurement applies for services with RLC AM enabled only.
    d) Each measurement is an integer value (Unit: ms).
    e) The measurement name has the form Cell.InitTmeDIPDCPSDU.QoS, where QOS identifies the target quality of service class.
    f) NRCellCU.
    g) Valid for packet switched traffic.
    h) 5GS.

SUCC_DL_PDCP_SDU (i.e., number of (successful/confirmed) DL PDCP SDU packets), in other words, number of DL PDCP SDUs successfully received by UE:

a) This measurement provides number of DL PDCP SDU successfully received by UE. The measurement is split into subcounters per QoS level (mapped 5QI or QCI in NR option 3) with RLC AM enabled.
b) Cumulative counter (CC).
c) This measurement is pegged by successful reception of the DL PDCP SDU by UE in RLC AM which is communicated as DL PDCP PDU (the PDCP SDU is mapped to) successfully delivered to UE within the DDDS message (e.g. 3GPP TS 38.425) sent from DU to CU UP. The measurement applies for services with RLC AM enabled only.
d) Each measurement is an integer value.
e) The measurement name has the form Cell.SuccDlPDCPSDU.QoS, where QOS identifies the target quality of service class.
f) NRCellCU.
g) Valid for packet switched traffic.
h) 5GS.

END_TIME_DL_PDCP_SDU (i.e., sum of points in time of transmission of respective last parts of respective (successful/confirmed) DL PDCP SDUs from the gNB (i.e., a DU thereof)), in other words, sum of points in time the DL PDCP SDUs are successfully received by UE:

a) This measurement provides sum of points in time the DL PDCP SDU successfully received by UE. The measurement is split into subcounters per QoS level (mapped 5QI or QCI in NR option 3) with RLC AM enabled.
b) Cumulative counter (CC).
c) This measurement is obtained by summing up the point in time samples, each sample is related to point in time the last part of DL PDCP SDU sent to UE and consequently successfully received by UE in RLC AM and communicated as DL PDCP PDU (the PDCP SDU is mapped to) successfully delivered to UE within the DDDS message (e.g. 3GPP TS 38.425) sent from DU to CU UP. The measurement applies for services with RLC AM enabled only.
d) Each measurement is an integer value (Unit: ms).
e) The measurement name has the form Cell.EndTmeDlPDCPSDU.QoS, where QOS identifies the target quality of service class.
f) NRCellDU.
g) Valid for packet switched traffic.
h) 5GS.

According to example embodiments, a KPI providing average DL PDCP SDU delay may be specified as follows: Downlink delay in NG-RAN for a NRCellCU:

a) DLDelay_5GNR_ NRCellCU.
b) This KPI describes the average packet transmission delay through the RAN part to the UE. It is used to evaluate delay performance of NG-RAN in downlink for a NRCellCU. It is the average packets delay from reception of first part of IP packet (PDCP SDU) in gNB-CU-UP until its last part was received by the UE according to received RLC ACK for AM mode. It is a time interval (0.1 ms). The KPI type is MEAN. This KPI is split into KPIs per QoS level (mapped 5QI or QCI in NR option 3).
c) DLDelay_5GNR_ NRCellCU.QoS = (Cell.EndTmeDlPDCPSDU. QoS - Cell.InitTmeDlPDCPSDU. QoS) / Cell.SuccDlPDCPSDU. QoS
d) NRCellCU.

The above-described procedures and functions may be implemented by respective functional elements, processors, or the like, as described below.

In the foregoing exemplary description of the network entity, only the units that are relevant for understanding the principles of the disclosure have been described using functional blocks. The network entity may comprise further units that are necessary for its respective operation. However, a description of these units is omitted in this specification. The arrangement of the functional blocks of the devices is not construed to limit the disclosure, and the functions may be performed by one block or further split into sub-blocks.

When in the foregoing description it is stated that the apparatus, i.e. network entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

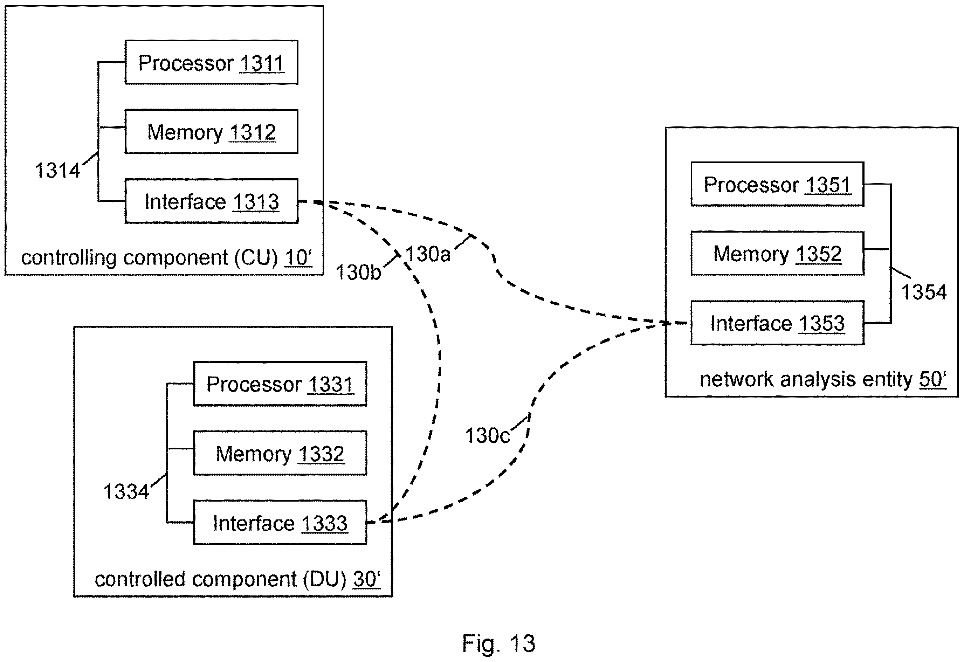

In Figure 13, an alternative illustration of apparatuses according to example embodiments is depicted. As indicated in Figure 13, according to example embodiments, the apparatus (network node or entity) 10' (corresponding to the network node or entity 10) comprises a processor 1311, a memory 1312 and an interface 1313, which are connected by a bus 1314 or the like. Further, according to example embodiments, the apparatus (network node or entity) 30' (corresponding to the network node or entity 30) comprises a processor 1331, a memory 1332 and an interface 1333, which are connected by a bus 1334 or the like. Further, according to example embodiments, the apparatus (network node or entity) 50' (corresponding to the network node or entity 50) comprises a processor 1351, a memory 1352 and an interface 1353, which are connected by a bus 1354 or the like. The apparatuses may be connected via links 130a, 130b, 130c, respectively.

The processor 1311/1331/1351 and/or the interface 1313/1333/1353 may also include a modem or the like to facilitate communication over a (hardwire or wireless) link, respectively. The interface 1313/1333/1353 may include a suitable transceiver coupled to one or more antennas or communication means for (hardwire or wireless) communications with the linked or connected device(s), respectively. The interface 1313/1333/1353 is generally configured to communicate with at least one other apparatus, i.e. the interface thereof.

The memory 1312/1332/1352 may store respective programs assumed to include program instructions or computer program code that, when executed by the respective processor, enables the respective electronic device or apparatus to operate in accordance with the example embodiments.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to example embodiments, an apparatus representing the network node or entity 10 (implementing a controlling component of a network assembly providing wireless communication access to a network, the controlling component controlling a plurality of controlled components of said network assembly and being connected to at least a first controlled component of said plurality of controlled components) comprises at least one processor 1311, at least one memory 1312 including computer program code, and at least one interface 1313 configured for communication with at least another apparatus. The processor (i.e. the at least one processor 1311, with the at least one memory 1312 and the computer program code) is configured to perform monitoring, in a measurement period, arrival of downlink transmission data units at said network assembly (thus the apparatus comprising corresponding means for monitoring), to perform registering, based on said monitoring, times of arrival of said downlink transmission data units at said network assembly within said measurement period (thus the apparatus comprising corresponding means for registering), to perform generating information indicative of said times of arrival of delivery confirmed downlink transmission data units out of said downlink transmission data units (thus the apparatus comprising corresponding means for generating), and to perform transmitting said information indicative of said times of arrival to a network analysis entity (thus the apparatus comprising corresponding means for transmitting).

According to example embodiments, an apparatus representing the network node or entity 30 (implementing a first controlled component of a network assembly providing wireless communication access to a network, the first controlled component being controlled by a controlling component of said network assembly controlling a plurality of controlled components of said network assembly including said first controlled component, and the first controlled component being connected to said controlling component) comprises at least one processor 1331, at least one memory 1332 including computer program code, and at least one interface 1333 configured for communication with at least another apparatus. The processor (i.e. the at least one processor 1331, with the at least one memory 1332 and the computer program code) is configured to perform monitoring, in a measurement period, departure of downlink transmission data units from said network assembly (thus the apparatus comprising corresponding means for monitoring), to perform registering, based on said monitoring, times of departure of said downlink transmission data units from said network assembly within said measurement period (thus the apparatus comprising corresponding means for registering), to perform generating information indicative of said times of departure of delivery confirmed downlink transmission data units out of said downlink transmission data units (thus the apparatus comprising corresponding means for generating), and to perform transmitting said information indicative of said times of departure to a network analysis entity (thus the apparatus comprising corresponding means for transmitting).

According to example embodiments, an apparatus representing the network node or entity 50 (implementing a network analysis entity) comprises at least one processor 1351, at least one memory 1352 including computer program code, and at least one interface 1353 configured for communication with at least another apparatus. The processor (i.e. the at least one processor 1351, with the at least one memory 1352 and the computer program code) is configured to perform receiving, from a controlling component of a network assembly providing wireless communication access to a network, the controlling component controlling a plurality of controlled components of said network assembly and being connected to at least a first controlled component of said plurality of controlled components, information indicative of times of arrival of delivery confirmed downlink transmission data units arriving at said network assembly within a measurement period (thus the apparatus comprising corresponding means for receiving), to perform receiving, from said first controlled component, information indicative of times of departure of said delivery confirmed downlink transmission data units departing from said network assembly within said measurement period, and to perform determining an average downlink transmission data unit delay based on said information indicative of said times of arrival and said information indicative of said times of departure (thus the apparatus comprising corresponding means for determining).

For further details regarding the operability/functionality of the individual apparatuses, reference is made to the above description in connection with any one of Figures 1 to 12, respectively.

For the purpose of the present disclosure as described herein above, it should be noted that

- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;

- generally, any method step is suitable to be implemented as software or by hardware without changing the idea of the embodiments and its modification in terms of the functionality implemented;

- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;

- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;

- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;

- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present disclosure. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present disclosure also covers any conceivable combination of method steps and operations described above, and any conceivable combination of nodes, apparatuses, modules or elements described above, as long as the above-described concepts of methodology and structural arrangement are applicable.

In view of the above, there are provided measures for data unit delay measurement. Such measures exemplarily comprise, at a controlling component of a network assembly providing wireless communication access to a network, the controlling component controlling a plurality of controlled components of said network assembly and being connected to at least a first controlled component of said plurality of controlled components: monitoring, in a measurement period, arrival of downlink transmission data units at said network assembly, registering, based on said monitoring, times of arrival of said downlink transmission data units at said network assembly within said measurement period, generating information indicative of said times of arrival of delivery confirmed downlink transmission data units out of said downlink transmission data units, and transmitting said information indicative of said times of arrival to a network analysis entity.

Even though the disclosure is described above with reference to the examples according to the accompanying drawings, it is to be understood that the disclosure is not restricted thereto. Rather, it is apparent to those skilled in the art that the present disclosure can be modified in many ways without departing from the scope of the inventive idea as disclosed herein.

At least the following Items are covered by what is specified above.

Item 1. A method of a controlling component of a network assembly providing wireless communication access to a network, the controlling component controlling a plurality of controlled components of said network assembly and being connected to at least a first controlled component of said plurality of controlled components, the method comprising

monitoring, in a measurement period, arrival of downlink transmission data units at said network assembly,
registering, based on said monitoring, times of arrival of said downlink transmission data units at said network assembly within said measurement period,
generating information indicative of said times of arrival of delivery confirmed downlink transmission data units out of said downlink transmission data units, and
transmitting said information indicative of said times of arrival to a network analysis entity.

Item 2. The method according to Item 1, wherein

in relation to said generating, the method further comprises
determining a sum of said times of arrival of said delivery confirmed downlink transmission data units, and
said information indicative of said times of arrival includes said sum.

Item 3. The method according to Item 1 or 2, further comprising

counting, based on said monitoring, a number of said delivery confirmed downlink transmission data units, and
transmitting information indicative of said number to said network analysis entity.

Item 4. The method according to any of Items 1 to 3, wherein
in relation to said registering, the method further comprises
taking, as said time of arrival of a respective downlink transmission data unit, an arrival time of a leading portion of said respective downlink transmission data unit at said network assembly.

Item 5. The method according to any of Items 1 to 4, wherein
said information indicative of said times of arrival is on a per quality-of-service level basis.

Item 6. The method according to Item 3, or 4 or 5 dependent on Item 3, wherein
said information indicative of said number is on a per quality-of-service level basis.

Item 7. The method according to any of Items 1 to 5, further comprising

receiving information indicative of successfully received downlink transmission data units of said downlink transmission data units, said successfully received downlink transmission data units being successfully received at a respective destination terminal, and
considering said successfully received downlink transmission data units as said delivery confirmed downlink transmission data units.

Item 8. The method according to Item 7, wherein
said information indicative of said successfully received downlink transmission data units is included in a downlink data delivery status report.

Item 9. The method according to any of Items 1 to 8, wherein

each of said downlink transmission data units is a downlink packet data convergence protocol service data unit, and/or
said controlling component of said network assembly is a centralized unit, and/or
each of said plurality of controlled components of said network assembly is a distributed unit, and/or
said network assembly is a gNB.

Item 10. A method of a first controlled component of a network assembly providing wireless communication access to a network, the first controlled component being controlled by a controlling component of said network assembly controlling a plurality of controlled components of said network assembly including said first controlled component, and the first controlled component being connected to said controlling component, the method comprising

monitoring, in a measurement period, departure of downlink transmission data units from said network assembly,
registering, based on said monitoring, times of departure of said downlink transmission data units from said network assembly within said measurement period,
generating information indicative of said times of departure of delivery confirmed downlink transmission data units out of said downlink transmission data units, and
transmitting said information indicative of said times of departure to a network analysis entity.

Item 11. The method according to Item 10, wherein

in relation to said generating, the method further comprises
determining a sum of said times of departure of said delivery confirmed downlink transmission data units, and
said information indicative of said times of departure includes said sum.

Item 12. The method according to Items 10 or 11, wherein
in relation to said registering, the method further comprises
taking, as said time of departure of a respective downlink transmission data unit, a departure time of a trailing portion of said respective downlink transmission data unit from said network assembly.

Item 13. The method according to any of Items 10 to 12, wherein
said information indicative of said times of departure is on a per quality-of-service level basis.

Item 14. The method according to any of Items 10 to 13, further comprising

observing success of reception for each of said downlink transmission data units at a respective destination terminal, and
considering successfully received downlink transmission data units of said downlink transmission data units as said delivery confirmed downlink transmission data units, said successfully received downlink transmission data units being successfully received at said respective destination terminal.

Item 15. The method according to Item 14, further comprising

generating information indicative of said successfully received downlink transmission data units, and
transmitting said information indicative of said successfully received downlink transmission data units to said controlling component.

Item 16. The method according to Item 15, wherein
said information indicative of said successfully received downlink transmission data units is included in a downlink data delivery status report.

Item 17. The method according to any of Items 10 to 16 wherein

each of said downlink transmission data units is a downlink packet data convergence protocol service data unit, and/or
said controlling component of said network assembly is a centralized unit, and/or
each of said plurality of controlled components of said network assembly is a distributed unit, and/or
said network assembly is a gNB.

Item 18. A method of a network analysis entity, the method comprising

receiving, from a controlling component of a network assembly providing wireless communication access to a network, the controlling component controlling a plurality of controlled components of said network assembly and being connected to at least a first controlled component of said plurality of controlled components, information indicative of times of arrival of delivery confirmed downlink transmission data units arriving at said network assembly within a measurement period,

receiving, from said first controlled component, information indicative of times of departure of said delivery confirmed downlink transmission data units departing from said network assembly within said measurement period, and determining an average downlink transmission data unit delay based on said information indicative of said times of arrival and said information indicative of said times of departure.

Item 19. The method according to Item 18, wherein

said information indicative of said times of arrival includes a sum of said times of arrival, and said information indicative of said times of departure includes a sum of said times of departure.

Item 20. The method according to Item 18 or 19, further comprising

receiving, from said controlling component, information indicative of a number of said delivery confirmed downlink transmission data units arriving at said network assembly within said measurement period, wherein said determining is further based on said information indicative of said number.

Item 21. The method according to Item 20 dependent on Item 19, wherein
in relation to said determining, the method further comprises calculating a difference between said sum of said times of departure and said sum of said times of arrival, and
dividing said difference by said number.

Item 22. The method according to any of Items 18 to 21, further comprising
transmitting said average downlink transmission data unit delay.

Item 23. The method according to any of Items 18 to 22, wherein
said average downlink transmission data unit delay is on a per quality-of-service level basis.

Item 24. The method according to any of Items 18 to 23, wherein

each of said downlink transmission data units is a downlink packet data convergence protocol service data unit, and/or
said controlling component of said network assembly is a centralized unit, and/or
each of said plurality of controlled components of said network assembly is a distributed unit, and/or
said network assembly is a gNB.

Item 25. An apparatus of a controlling component of a network assembly providing wireless communication access to a network, the controlling component controlling a plurality of controlled components of said network assembly and being connected to at least a first controlled component of said plurality of controlled components, the apparatus comprising

monitoring circuitry configured to monitor, in a measurement period, arrival of downlink transmission data units at said network assembly,
registering circuitry configured to register, based on said monitoring, times of arrival of said downlink transmission data units at said network assembly within said measurement period,
generating circuitry configured to generate information indicative of said times of arrival of delivery confirmed downlink transmission data units out of said downlink transmission data units, and
transmitting circuitry configured to transmit said information indicative of said times of arrival to a network analysis entity.

Item 26. The apparatus according to Item 25, further comprising

determining circuitry configured to determine a sum of said times of arrival of said delivery confirmed downlink transmission data units, wherein
said information indicative of said times of arrival includes said sum.

Item 27. The apparatus according to Item 25 or 26, further comprising

counting circuitry configured to count, based on said monitoring, a number of said delivery confirmed downlink transmission data units, and
transmitting circuitry configured to transmit information indicative of said number to said network analysis entity.

Item 28. The apparatus according to any of Items 25 to 27, further comprising
taking circuitry configured to take, as said time of arrival of a respective downlink transmission data unit, an arrival time of a leading portion of said respective downlink transmission data unit at said network assembly.
Item 29. The apparatus according to any of Items 25 to 28, wherein
said information indicative of said times of arrival is on a per quality-of-service level basis.
Item 30. The apparatus according to Item 27, or 28 or 29 dependent on Item 27, wherein
said information indicative of said number is on a per quality-of-service level basis.
Item 31. The apparatus according to any of Items 25 to 29, further comprising

receiving circuitry configured to receive information indicative of successfully received downlink transmission data units of said downlink transmission data units, said successfully received downlink transmission data units being successfully received at a respective destination terminal, and
considering circuitry configured to consider said successfully received downlink transmission data units as said delivery confirmed downlink transmission data units.

Item 32. The apparatus according to Item 31, wherein
said information indicative of said successfully received downlink transmission data units is included in a downlink data delivery status report.
Item 33. The apparatus according to any of Items 25 to 32, wherein

each of said downlink transmission data units is a downlink packet data convergence protocol service data unit, and/or
said controlling component of said network assembly is a centralized unit, and/or
each of said plurality of controlled components of said network assembly is a distributed unit, and/or
said network assembly is a gNB.

Item 34. An apparatus of a first controlled component of a network assembly providing wireless communication access to a network, the first controlled component being controlled by a controlling component of said network assembly controlling a plurality of controlled components of said network assembly including said first controlled component, and the first controlled component being connected to said controlling component, the apparatus comprising

monitoring circuitry configured to monitor, in a measurement period, departure of downlink transmission data units from said network assembly,
registering circuitry configured to register, based on said monitoring, times of departure of said downlink transmission data units from said network assembly within said measurement period,
generating circuitry configured to generate information indicative of said times of departure of delivery confirmed downlink transmission data units out of said downlink transmission data units, and
transmitting circuitry configured to transmit said information indicative of said times of departure to a network analysis entity.

Item 35. The apparatus according to Item 34, further comprising

determining circuitry configured to determine a sum of said times of departure of said delivery confirmed downlink transmission data units, wherein
said information indicative of said times of departure includes said sum.

Item 36. The apparatus according to Items 34 or 35, further comprising
taking circuitry configured to take, as said time of departure of a respective downlink transmission data unit, a departure time of a trailing portion of said respective downlink transmission data unit from said network assembly.
Item 37. The apparatus according to any of Items 34 to 36, wherein
said information indicative of said times of departure is on a per quality-of-service level basis.
Item 38. The apparatus according to any of Items 34 to 37, further comprising

observing circuitry configured to observe success of reception for each of said downlink transmission data units at a respective destination terminal, and
considering circuitry configured to consider successfully received downlink transmission data units of said downlink transmission data units as said delivery confirmed downlink transmission data units, said successfully received downlink transmission data units being successfully received at said respective destination terminal.

Item 39. The apparatus according to Item 38, further comprising

generating circuitry configured to generate information indicative of said successfully received downlink transmission data units, and
transmitting circuitry configured to transmit said information indicative of said successfully received downlink transmission data units to said controlling component.

Item 40. The apparatus according to Item 39, wherein
said information indicative of said successfully received downlink transmission data units is included in a downlink data delivery status report.
Item 41. The apparatus according to any of Items 34 to 40 wherein

each of said downlink transmission data units is a downlink packet data convergence protocol service data unit, and/or
said controlling component of said network assembly is a centralized unit, and/or
each of said plurality of controlled components of said network assembly is a distributed unit, and/or
said network assembly is a gNB.

Item 42. An apparatus of a network analysis entity, the apparatus comprising

receiving circuitry configured to

receive, from a controlling component of a network assembly providing wireless communication access to a network, the controlling component controlling a plurality of controlled components of said network assembly and being connected to at least a first controlled component of said plurality of controlled components, information indicative of times of arrival of delivery confirmed downlink transmission data units arriving at said network assembly within a measurement period, and to
receive, from said first controlled component, information indicative of times of departure of said delivery confirmed downlink transmission data units departing from said network assembly within said measurement period, and

determining circuitry configured to determine an average downlink transmission data unit delay based on said information indicative of said times of arrival and said information indicative of said times of departure.

Item 43. The apparatus according to Item 42, wherein

said information indicative of said times of arrival includes a sum of said times of arrival, and
said information indicative of said times of departure includes a sum of said times of departure.

Item 44. The apparatus according to Item 42 or 43, further comprising

receiving circuitry configured to receive, from said controlling component, information indicative of a number of said delivery confirmed downlink transmission data units arriving at said network assembly within said measurement period, wherein
said determining circuitry is configured to determine further based on said information indicative of said number.

Item 45. The apparatus according to Item 44 dependent on Item 43, further comprising

calculating circuitry configured to calculate a difference between said sum of said times of departure and said sum of said times of arrival, and
dividing circuitry configured to divide said difference by said number.

Item 46. The apparatus according to any of Items 42 to 45, further comprising
transmitting circuitry configured to transmit said average downlink transmission data unit delay.
Item 47. The apparatus according to any of Items 42 to 46, wherein
said average downlink transmission data unit delay is on a per quality-of-service level basis.

Item 48. The apparatus according to any of Items 42 to 47, wherein

each of said downlink transmission data units is a downlink packet data convergence protocol service data unit, and/or
said controlling component of said network assembly is a centralized unit, and/or
each of said plurality of controlled components of said network assembly is a distributed unit, and/or
said network assembly is a gNB.

Item 49. An apparatus of a controlling component of a network assembly providing wireless communication access to a network, the controlling component controlling a plurality of controlled components of said network assembly and being connected to at least a first controlled component of said plurality of controlled components, the apparatus comprising

at least one processor,
at least one memory including computer program code, and
at least one interface configured for communication with at least another apparatus,
the at least one processor, with the at least one memory and the computer program code, being configured to cause the apparatus to perform:
monitoring, in a measurement period, arrival of downlink transmission data units at said network assembly,
registering, based on said monitoring, times of arrival of said downlink transmission data units at said network assembly within said measurement period,
generating information indicative of said times of arrival of delivery confirmed downlink transmission data units out of said downlink transmission data units, and
transmitting said information indicative of said times of arrival to a network analysis entity.

Item 50. The apparatus according to Item 49, wherein

in relation to said generating, the at least one processor, with the at least one memory and the computer program code, being configured to cause the apparatus to perform:
determining a sum of said times of arrival of said delivery confirmed downlink transmission data units, and
said information indicative of said times of arrival includes said sum.

Item 51. The apparatus according to Item 49 or 50, wherein
the at least one processor, with the at least one memory and the computer program code, being configured to cause the apparatus to perform:

counting, based on said monitoring, a number of said delivery confirmed downlink transmission data units, and
transmitting information indicative of said number to said network analysis entity.

Item 52. The apparatus according to any of Items 49 to 51, wherein
in relation to said registering, the at least one processor, with the at least one memory and the computer program code, being configured to cause the apparatus to perform:
taking, as said time of arrival of a respective downlink transmission data unit, an arrival time of a leading portion of said respective downlink transmission data unit at said network assembly.
Item 53. The apparatus according to any of Items 49 to 52, wherein
said information indicative of said times of arrival is on a per quality-of-service level basis.
Item 54. The apparatus according to Item 51, or 52 or 53 dependent on Item 51, wherein
said information indicative of said number is on a per quality-of-service level basis.
Item 55. The apparatus according to any of Items 49 to 53, wherein

the at least one processor, with the at least one memory and the computer program code, being configured to cause the apparatus to perform:
receiving information indicative of successfully received downlink transmission data units of said downlink transmission data units, said successfully received downlink transmission data units being successfully received at a respective destination terminal, and
considering said successfully received downlink transmission data units as said delivery confirmed downlink transmission data units.

Item 56. The apparatus according to Item 55, wherein

said information indicative of said successfully received downlink transmission data units is included in a downlink data delivery status report.

Item 57. The apparatus according to any of Items 49 to 56, wherein

each of said downlink transmission data units is a downlink packet data convergence protocol service data unit, and/or said controlling component of said network assembly is a centralized unit, and/or each of said plurality of controlled components of said network assembly is a distributed unit, and/or said network assembly is a gNB.

Item 58. An apparatus of a first controlled component of a network assembly providing wireless communication access to a network, the first controlled component being controlled by a controlling component of said network assembly controlling a plurality of controlled components of said network assembly including said first controlled component, and the first controlled component being connected to said controlling component, the apparatus comprising

at least one processor,
at least one memory including computer program code, and
at least one interface configured for communication with at least another apparatus,
the at least one processor, with the at least one memory and the computer program code, being configured to cause the apparatus to perform:

monitoring, in a measurement period, departure of downlink transmission data units from said network assembly,
registering, based on said monitoring, times of departure of said downlink transmission data units from said network assembly within said measurement period,
generating information indicative of said times of departure of delivery confirmed downlink transmission data units out of said downlink transmission data units, and
transmitting said information indicative of said times of departure to a network analysis entity.

Item 59. The apparatus according to Item 58, wherein

in relation to said generating, the at least one processor, with the at least one memory and the computer program code, being configured to cause the apparatus to perform:
determining a sum of said times of departure of said delivery confirmed downlink transmission data units, and
said information indicative of said times of departure includes said sum.

Item 60. The apparatus according to Items 58 or 59, wherein
in relation to said registering, the at least one processor, with the at least one memory and the computer program code, being configured to cause the apparatus to perform:
taking, as said time of departure of a respective downlink transmission data unit, a departure time of a trailing portion of said respective downlink transmission data unit from said network assembly.

Item 61. The apparatus according to any of Items 58 to 60, wherein
said information indicative of said times of departure is on a per quality-of-service level basis.

Item 62. The apparatus according to any of Items 58 to 61, wherein
the at least one processor, with the at least one memory and the computer program code, being configured to cause the apparatus to perform:

observing success of reception for each of said downlink transmission data units at a respective destination terminal, and
considering successfully received downlink transmission data units of said downlink transmission data units as said delivery confirmed downlink transmission data units, said successfully received downlink transmission data units being successfully received at said respective destination terminal.

Item 63. The apparatus according to Item 62, wherein

the at least one processor, with the at least one memory and the computer program code, being configured to cause the apparatus to perform:
generating information indicative of said successfully received downlink transmission data units, and
transmitting said information indicative of said successfully received downlink transmission data units to said controlling component.

Item 64. The apparatus according to Item 63, wherein
said information indicative of said successfully received downlink transmission data units is included in a downlink data delivery status report.

Item 65. The apparatus according to any of Items 58 to 64 wherein

each of said downlink transmission data units is a downlink packet data convergence protocol service data unit, and/or
said controlling component of said network assembly is a centralized unit, and/or
each of said plurality of controlled components of said network assembly is a distributed unit, and/or
said network assembly is a gNB.

Item 66. An apparatus of a network analysis entity, the apparatus comprising

at least one processor,
at least one memory including computer program code, and
at least one interface configured for communication with at least another apparatus,
the at least one processor, with the at least one memory and the computer program code, being configured to cause the apparatus to perform:

receiving, from a controlling component of a network assembly providing wireless communication access to a network, the controlling component controlling a plurality of controlled components of said network assembly and being connected to at least a first controlled component of said plurality of controlled components, information indicative of times of arrival of delivery confirmed downlink transmission data units arriving at said network assembly within a measurement period,
receiving, from said first controlled component, information indicative of times of departure of said delivery confirmed downlink transmission data units departing from said network assembly within said measurement period, and
determining an average downlink transmission data unit delay based on said information indicative of said times of arrival and said information indicative of said times of departure.

Item 67. The apparatus according to Item 66, wherein

said information indicative of said times of arrival includes a sum of said times of arrival, and
said information indicative of said times of departure includes a sum of said times of departure.

Item 68. The apparatus according to Item 66 or 67, wherein
the at least one processor, with the at least one memory and the computer program code, being configured to cause the apparatus to perform:

receiving, from said controlling component, information indicative of a number of said delivery confirmed downlink transmission data units arriving at said network assembly within said measurement period, wherein
said determining is further based on said information indicative of said number.

Item 69. The apparatus according to Item 68 dependent on Item 67, wherein
in relation to said determining, the at least one processor, with the at least one memory and the computer program code, being configured to cause the apparatus to perform:

calculating a difference between said sum of said times of departure and said sum of said times of arrival, and
dividing said difference by said number.

Item 70. The apparatus according to any of Items 66 to 69, wherein
the at least one processor, with the at least one memory and the computer program code, being configured to cause the apparatus to perform:
transmitting said average downlink transmission data unit delay.

Item 71. The apparatus according to any of Items 66 to 70, wherein
said average downlink transmission data unit delay is on a per quality-of-service level basis.

Item 72. The apparatus according to any of Items 66 to 71, wherein

each of said downlink transmission data units is a downlink packet data convergence protocol service data unit, and/or

said controlling component of said network assembly is a centralized unit, and/or
each of said plurality of controlled components of said network assembly is a distributed unit, and/or
said network assembly is a gNB.

Item 73. A computer program product comprising computer-executable computer program code which, when the program is run on a computer, is configured to cause the computer to carry out the method according to any one of Items 1 to 9, 10 to 17, or 18 to 24.

Item 74. The computer program product according to Item 73, wherein the computer program product comprises a computer-readable medium on which the computer-executable computer program code is stored, and/or wherein the program is directly loadable into an internal memory of the computer or a processor thereof.

List of acronyms and abbreviations

| | |
|---|---|
| 3GPP | 3rd Generation Partnership Project |
| 5G | 5th Generation |
| AM | acknowledge mode |
| CC | cumulative counter |
| CN | core network |
| CP | control plane |
| CU | centralized unit, control unit |
| CU-UP | centralized unit in the user plane |
| DDDS | downlink data delivery status |
| DL | downlink |
| DU | distributed unit, distribution unit |
| GPRS | General Packet Radio System |
| GTP | GPRS tunneling protocol |
| HARQ | hybrid automatic repeat reQuest |
| IP | internet protocol |
| KPI | key performance indicator |
| NR | New Radio |
| PDCP | packet data configuration protocol |
| PDU | protocol data unit |
| QCI | QoS class identifier |
| QoS | quality of (provided) service(s) |
| RLC | radio link control |
| SDU | service data unit |
| UE | user equipment |
| UP | user plane |
| UPF | user plane function |
| URLLC | ultra-reliable low latency communication |

**Claims**

1.  A method of a controlling component of a network assembly providing wireless communication access to a network, the controlling component controlling a plurality of controlled components of said network assembly and being connected to at least a first controlled component of said plurality of controlled components, the method comprising

    monitoring, in a measurement period, arrival of downlink transmission data units at said network assembly,
    registering, based on said monitoring, times of arrival of said downlink transmission data units at said network assembly within said measurement period,
    generating information indicative of said times of arrival of delivery confirmed downlink transmission data units out of said downlink transmission data units, and
    transmitting said information indicative of said times of arrival to a network analysis entity.

2.  The method according to claim 1, wherein

in relation to said generating, the method further comprises
determining a sum of said times of arrival of said delivery confirmed downlink transmission data units, and said information indicative of said times of arrival includes said sum.

3. The method according to claim 1 or 2, further comprising

counting, based on said monitoring, a number of said delivery confirmed downlink transmission data units, and transmitting information indicative of said number to said network analysis entity, and wherein optionally in relation to said registering, the method further comprises
taking, as said time of arrival of a respective downlink transmission data unit, an arrival time of a leading portion of said respective downlink transmission data unit at said network assembly, and wherein optionally said information indicative of said times of arrival is on a per quality-of-service level basis.

4. The method according to any of claims 1 to 3, further comprising

receiving information indicative of successfully received downlink transmission data units of said downlink transmission data units, said successfully received downlink transmission data units being successfully received at a respective destination terminal, and
considering said successfully received downlink transmission data units as said delivery confirmed downlink transmission data units, and wherein optionally
said information indicative of said successfully received downlink transmission data units is included in a downlink data delivery status report.

5. A method of a first controlled component of a network assembly providing wireless communication access to a network, the first controlled component being controlled by a controlling component of said network assembly controlling a plurality of controlled components of said network assembly including said first controlled component, and the first controlled component being connected to said controlling component, the method comprising

monitoring, in a measurement period, departure of downlink transmission data units from said network assembly, registering, based on said monitoring, times of departure of said downlink transmission data units from said network assembly within said measurement period,
generating information indicative of said times of departure of delivery confirmed downlink transmission data units out of said downlink transmission data units, and
transmitting said information indicative of said times of departure to a network analysis entity.

6. The method according to claim 5, wherein

in relation to said generating, the method further comprises
determining a sum of said times of departure of said delivery confirmed downlink transmission data units, and said information indicative of said times of departure includes said sum.

7. The method according to claims 5 or 6, wherein

in relation to said registering, the method further comprises
taking, as said time of departure of a respective downlink transmission data unit, a departure time of a trailing portion of said respective downlink transmission data unit from said network assembly, and wherein optionally said information indicative of said times of departure is on a per quality-of-service level basis.

8. The method according to any of claims 5 to 7, further comprising

observing success of reception for each of said downlink transmission data units at a respective destination terminal, and
considering successfully received downlink transmission data units of said downlink transmission data units as said delivery confirmed downlink transmission data units, said successfully received downlink transmission data units being successfully received at said respective destination terminal, and optionally further comprising
generating information indicative of said successfully received downlink transmission data units, and
transmitting said information indicative of said successfully received downlink transmission data units to said controlling component, and wherein optionally

said information indicative of said successfully received downlink transmission data units is included in a downlink data delivery status report.

9. A method of a network analysis entity, the method comprising

receiving, from a controlling component of a network assembly providing wireless communication access to a network, the controlling component controlling a plurality of controlled components of said network assembly and being connected to at least a first controlled component of said plurality of controlled components, information indicative of times of arrival of delivery confirmed downlink transmission data units arriving at said network assembly within a measurement period,
receiving, from said first controlled component, information indicative of times of departure of said delivery confirmed downlink transmission data units departing from said network assembly within said measurement period, and
determining an average downlink transmission data unit delay based on said information indicative of said times of arrival and said information indicative of said times of departure.

10. The method according to claim 9, wherein

said information indicative of said times of arrival includes a sum of said times of arrival, and
said information indicative of said times of departure includes a sum of said times of departure, and optionally further comprising
receiving, from said controlling component, information indicative of a number of said delivery confirmed downlink transmission data units arriving at said network assembly within said measurement period, wherein
said determining is further based on said information indicative of said number.

11. The method according to claim 10, wherein
in relation to said determining, the method further comprises

calculating a difference between said sum of said times of departure and said sum of said times of arrival, and
dividing said difference by said number.

12. The method according to any of claims 9 to 11, further comprising

transmitting said average downlink transmission data unit delay, and wherein optionally
said average downlink transmission data unit delay is on a per quality-of-service level basis.

13. An apparatus of a controlling component of a network assembly providing wireless communication access to a network, the controlling component controlling a plurality of controlled components of said network assembly and being connected to at least a first controlled component of said plurality of controlled components, the apparatus comprising

monitoring circuitry configured to monitor, in a measurement period, arrival of downlink transmission data units at said network assembly,
registering circuitry configured to register, based on said monitoring, times of arrival of said downlink transmission data units at said network assembly within said measurement period,
generating circuitry configured to generate information indicative of said times of arrival of delivery confirmed downlink transmission data units out of said downlink transmission data units, and
transmitting circuitry configured to transmit said information indicative of said times of arrival to a network analysis entity.

14. An apparatus of a first controlled component of a network assembly providing wireless communication access to a network, the first controlled component being controlled by a controlling component of said network assembly controlling a plurality of controlled components of said network assembly including said first controlled component, and the first controlled component being connected to said controlling component, the apparatus comprising

monitoring circuitry configured to monitor, in a measurement period, departure of downlink transmission data units from said network assembly,
registering circuitry configured to register, based on said monitoring, times of departure of said downlink transmission data units from said network assembly within said measurement period,
generating circuitry configured to generate information indicative of said times of departure of delivery confirmed downlink transmission data units out of said downlink transmission data units, and
transmitting circuitry configured to transmit said information indicative of said times of departure to a network analysis entity.

15. An apparatus of a network analysis entity, the apparatus comprising

receiving circuitry configured to

receive, from a controlling component of a network assembly providing wireless communication access to a network, the controlling component controlling a plurality of controlled components of said network assembly and being connected to at least a first controlled component of said plurality of controlled components, information indicative of times of arrival of delivery confirmed downlink transmission data units arriving at said network assembly within a measurement period, and to
receive, from said first controlled component, information indicative of times of departure of said delivery confirmed downlink transmission data units departing from said network assembly within said measurement period, and

determining circuitry configured to determine an average downlink transmission data unit delay based on said information indicative of said times of arrival and said information indicative of said times of departure.

| | |
|---|---|
| monitoring circuitry 11 | generating circuitry 13 |
| registering circuitry 12 | transmitting circuitry 14 |

controlling component (CU) 10

Fig. 1

Fig. 2

Fig. 3

```
+---------------------------------------------------------------------+
|                                                                     |
|  +------------------+     +------------------+   +----------------+  |
|  ! determining      !     | monitoring       |   | generating     |  |
|  ! circuitry 41     ! <-- | circuitry 31     |<->| circuitry 33   |  |
|  +------------------+  !   +------------------+   +----------------+  |
|                       !                                              |
|  +------------------+ !   +------------------+   +----------------+  |
|  ! taking           ! <-- | registering      |<->| transmitting   |  |
|  ! circuitry 42     !     | circuitry 32     |   | circuitry 34   |  |
|  +------------------+ !   +------------------+   +----------------+  |
|                       !                        !                     |
|  +------------------+ !                        !  +---------------+  |
|  ! observing        ! <--------------------------!! considering   !  |
|  ! circuitry 43     !                             ! circuitry 44  !  |
|  +------------------+                             +---------------+  |
|                                                                     |
|                        controlled component (DU) 30                 |
+---------------------------------------------------------------------+
```

Fig. 4

EP 4 447 398 A1

receiving
circuitry 51

determining
circuitry 52

network analysis entity 50

Fig. 5

EP 4 447 398 A1

Fig. 6

```
                                                                          S71
   ┌─────────────────────────────────────────────────────────┐
   │   monitoring, in a measurement period, arrival of downlink │
   │      transmission data units at a network assembly         │
   └─────────────────────────────────────────────────────────┘
                              │
                              ▼                                   S72
   ┌─────────────────────────────────────────────────────────┐
   │   registering, based on said monitoring, times of arrival of said │
   │  downlink transmission data units at said network assembly within │
   │                  said measurement period                  │
   └─────────────────────────────────────────────────────────┘
                              │
                              ▼                                   S73
   ┌─────────────────────────────────────────────────────────┐
   │  generating information indicative of said times of arrival of delivery │
   │   confirmed downlink transmission data units out of said downlink │
   │                  transmission data units                  │
   └─────────────────────────────────────────────────────────┘
                              │
                              ▼                                   S74
   ┌─────────────────────────────────────────────────────────┐
   │  transmitting said information indicative of said times of arrival to a │
   │                    network analysis entity                │
   └─────────────────────────────────────────────────────────┘
```

Fig. 7

```
                                                              ┌ S81
┌──────────────────────────────────────────────────────────┐╱
│      monitoring, in a measurement period, departure of downlink │
│         transmission data units from a network assembly    │
└──────────────────────────────────────────────────────────┘
                              │
                              ▼                               ┌ S82
┌──────────────────────────────────────────────────────────┐╱
│    registering, based on said monitoring, times of departure of said │
│      downlink transmission data units from said network assembly │
│                  within said measurement period            │
└──────────────────────────────────────────────────────────┘
                              │
                              ▼                               ┌ S83
┌──────────────────────────────────────────────────────────┐╱
│    generating information indicative of said times of departure of │
│    delivery confirmed downlink transmission data units out of said │
│                downlink transmission data units            │
└──────────────────────────────────────────────────────────┘
                              │
                              ▼                               ┌ S84
┌──────────────────────────────────────────────────────────┐╱
│  transmitting said information indicative of said times of departure to │
│                    a network analysis entity               │
└──────────────────────────────────────────────────────────┘
```

Fig. 8

S91

receiving, from a controlling component of a network assembly providing wireless communication access to a network, the controlling component controlling a plurality of controlled components of said network assembly and being connected to at least a first controlled component of said plurality of controlled components, information indicative of times of arrival of delivery confirmed downlink transmission data units arriving at said network assembly within a measurement period

S92

receiving, from said first controlled component, information indicative of times of departure of said delivery confirmed downlink transmission data units departing from said network assembly within said measurement period

S93

determining an average downlink transmission data unit delay based on said information indicative of said times of arrival and said information indicative of said times of departure

Fig. 9

EP 4 447 398 A1

S101 — Start of measurement period,
INIT_TIME_DL_PDCP_SDU=0
SUCC_DL_PDCP_SDU=0

S102 — Has new PDCP SDU
arrived to gNB (CU UP)
of which PDCP PDU
confirmed via DDDS
from DU as successfully
received by UE?

NO

YES

S103 — T= point in time the first part of the
PDCP SDU received in gNB (CU UP)

INIT_TIME_DL_PDCP_SDU =
INIT_TIME_DL_PDCP_SDU+T
SUCC_DL_PDCP_SDU++

S104 — End of Measurement period?

NO

YES

S105 — Report INIT_TIME_DL_PDCP_SDU and
SUCC_DL_PDCP_SDU to 3rd party tool

S106 — End

Fig. 10

35

S111

Start of measurement period,
END_TIME_DL_PDCP_SDU =0

S112

Has new PDCP PDU
arrived to gNB (CU UP)
consequently confirmed
via DDDS from DU to
CU UP as successfully
received by UE?

NO

YES

S113

T= point in time the last part of the PDCP
PDU successfully transmitted to UE

END_TIME_DL_PDCP_SDU =
END_TIME_DL_PDCP_SDU +T

S114

End of Measurement period?

NO

YES

S115

Report END_TIME_DL_PDCP_SDU to
3rd party tool

S116

End

Fig. 11

S121 — Start

S122 — Has END_TIME_DL_PDCP_SDU, INIT_TIME_DL_PDCP_SDU and SUCC_DL_PDCP_SDU been reported from gNB to 3rd party tool?

NO

YES

S123 — Averaged DL PDCP SDU delay = (END_TIME_DL_PDCP_SDU - INIT_TIME_DL_PDCP_SDU) / SUCC_DL_PDCP_SDU

S124 — Make "Averaged DL PDCP SDU delay" visible to customer tool via user interface.

S125 — End

Fig. 12

Fig. 13

Europäisches
Patentamt

European
Patent Office

Office européen
des brevets

# EUROPEAN SEARCH REPORT

**Application Number**

EP 24 16 7088

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/045924 A1 (YAO YIZHI [US] ET AL) 10 February 2022 (2022-02-10) | 1-4,13 | INV.<br>H04L43/0852<br>H04W24/00 |
| Y | * paragraph [0021] - paragraph [0037] *<br>* paragraph [0096] - paragraph [0097] *<br>* figures 1, 2, 4, 5 * | 5-12,14,15 | |
| Y | US 2022/094617 A1 (SZIGETI THOMAS [CA] ET AL) 24 March 2022 (2022-03-24) | 5-12,14,15 | |
| A | * paragraph [0016] - paragraph [0044] *<br>* figures 1-2B * | 1-4,13 | |
| A | WO 2021/062809 A1 (HUAWEI TECH CO LTD [CN]) 8 April 2021 (2021-04-08)<br>* paragraph [0091] - paragraph [0108] *<br>* paragraph [0112] - paragraph [0128] *<br>* figures 1, 7, 8 * | 1-15 | |

**TECHNICAL FIELDS
SEARCHED (IPC)**

H04L
H04W

The present search report has been drawn up for all claims

| Place of search | Date of completion of the search | Examiner |
|---|---|---|
| Munich | 21 June 2024 | Koch, György |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 16 7088

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2024

| Patent document cited in search report | | Publication date | Patent family member(s) | | Publication date |
|---|---|---|---|---|---|
| US 2022045924 | A1 | 10-02-2022 | CN | 112805965 A | 14-05-2021 |
| | | | CN | 117395706 A | 12-01-2024 |
| | | | US | 2022045924 A1 | 10-02-2022 |
| | | | US | 2024022490 A1 | 18-01-2024 |
| | | | WO | 2020061312 A1 | 26-03-2020 |
| US 2022094617 | A1 | 24-03-2022 | CN | 116250271 A | 09-06-2023 |
| | | | EP | 4218213 A1 | 02-08-2023 |
| | | | US | 2022094617 A1 | 24-03-2022 |
| | | | US | 2022377002 A1 | 24-11-2022 |
| | | | WO | 2022067325 A1 | 31-03-2022 |
| WO 2021062809 | A1 | 08-04-2021 | CN | 113826337 A | 21-12-2021 |
| | | | WO | 2021062809 A1 | 08-04-2021 |

EPO FORM P0459

For more details about this annex : see Official Journal of the European Patent Office, No. 12/82